# EUROPEAN PATENT APPLICATION

(11) **EP 1 777 920 A2**
(43) Date of publication of application: **25.04.2007**
(21) Application number: 06021953.2
(22) Date of filing: 19.10.2006
(51) Int. Cl.: H04M 1/02

(54) **A mobile terminal**

(30) Priority: 20.10.2005 KR 20050099369
(71) Applicant: LG Electronics Inc., Yongdungpo-Gu Seoul 150-010 (KR)
(72) Inventor: Park, Yeon-Woo, Seocho-Gu Seoul (KR); Lee, Sang Hyuck, Seoul-si (KR); Kim, Hyun Ho, Dongjak-gu Seoul (KR)
(74) Representative: Katérle, Axel

(57) **Abstract**

A mobile terminal having a slidable and rotatable cover. In one example embodiment, a mobile terminal includes a main body and a cover coupled to the main body. The cover is configured to slide along a longitudinal axis of the main body and to rotate with respect to the main body. A touch input device is also formed on the main body. The touch input device is exposed after the cover is slid and then rotated.

## Description

### BACKGROUND

### Field of the Invention

The present invention relates generally to a mobile terminal. More particularly, embodiments of the invention relate to a mobile terminal having an adjustable cover portion.

### Related Technology

Mobile communications terminals, such as mobile phones, personal digital assistants (PDAs), smart handheld devices, MP3 players and the like, have become an indispensable part of our daily lives. Mobile communication terminal technology has undergone tremendous advancement in recent years. One notable advancement is the decrease in the size of mobile communication terminals. Many mobile communication terminals are now small enough to be clipped to a belt or other article of clothing or to be stored in a pocket, briefcase, or purse.

Many mobile communication terminals include telecommunication functionality. Some mobile communication terminals also provide calendar, contact/address book, and/or email functionality to their users. Increasingly, additional functions such as a music player, a digital camera, a television, a camcorder, a video game player, and/or wireless internet access are also provided. As mobile communication terminals incorporate an increasing number of components and functions, it has become necessary to increase the number of corresponding menus and controls in order to operate each component or function. This increase in menus and controls has led to an increasingly complicated control and menu structure in mobile communication terminals.

Various terminal form factors have been developed for mobile communication terminals. These form factors include, for example, folding, sliding, flip, bar, and rotation form factors. In one implementation, a handheld wireless telephone includes a digital display formed in a cover portion of the phone. The cover portion is rotatable such that the display can be oriented in a "landscape" viewing position with respect to a main body of the telephone. This provides the user with the ability to view, and otherwise interact with, content displayed by the wireless telephone.

However, this "rotating" form factor in a mobile communication terminal can present several difficulties. For example, where a rotatable cover portion is longer than it is wide, a space on the main body that is exposed when the cover is rotated 90 degrees may be underutilized. At the same time, where the cover includes a display and the horizontal-to-vertical dimension ratio is fixed for images and/or text to be displayed on the display, the images or text may not be displayed appropriately before or after the display is rotated. In addition, where a rotatable cover portion includes input keys with orientation-dependent markings, such as arrows, users may become confused as to the function of each input key as the cover portion is rotated from one orientation to another.

Hence, it would be an advancement in the art to provide a mobile communications terminal that utilizes a rotatable display/cover portion that can be easily rotated with respect to the main body portion of the terminal and thereby provide an enhanced user interface for the terminal. Preferably, the rotation would be accomplished in a manner that does not obstruct or otherwise impair the functionality of the main body portion. In addition, it would be desirable to provide a device where images and/or text are appropriate displayed irrespective of the rotational position of the display. Also, the function and/or orientation of any input or control keys on the rotatable portion should be maintained in a manner so as to not cause confusion to a user.

### SUMMARY OF EXAMPLE EMBODIMENTS

Accordingly, embodiments of the present invention are directed to a mobile terminal having an adjustable cover portion that can be easily reoriented to provide, for example, an enhanced user interface. For example, embodiments of the present invention provide a cover portion that can be rotated with respect to the main body portion and thereby provide, for example, a "landscape" display orientation on a corresponding display. In example embodiments, the rotation is provided in a manner such that the corresponding display correctly displays text and/or images that have a fixed horizontal-to-vertical dimension ratio before and after the display is rotated. In addition, example embodiments modify the function of orientation-dependent input keys included on a rotatable portion depending on the orientation in order to make the function of each input key less confusing to the user of the mobile terminal.

In one example embodiment of the present invention, a mobile terminal includes a main body and a cover portion coupled to the main body. The cover is configured to first slide along a longitudinal axis of the main body and to then rotate with respect to the main body. A touch input device, such as a touch pad or a touch screen, is also formed on the main body. The touch input device is exposed after the cover is slid and then rotated.

In another example embodiment, a mobile terminal includes a main body and a cover. The cover is coupled to the main body, and includes a display. The cover is adapted to slide along a longitudinal axis of the main body and to rotate with respect to the main body, thereby presenting the display in a landscape, or other predetermined visual orientation. Optionally, one or more input or control keys are also formed on the cover. At least one of the multi-keys can be configured to perform a different function depending on the relative rotation between the cover and the main body.

The foregoing, together with other features and advantages of the present invention, will become more apparent when referred to the following specification, claims and accompanying drawings.

### BRIEF DESCRIPTION OF THE DRAWINGS

The invention will be described in detail with reference to the following drawings in which like numerals refer to like elements. The accompanying drawings, which are included to provide a further understanding of the invention and are incorporated in and constitute a part of this specification, illustrate embodiments of the invention and together with the description serve to explain the principles of the invention. In the drawings:

Figures 1A - 1C are perspective views illustrating an example of a mobile terminal having an adjustable cover portion having an integrated display;

Figure 2 discloses a schematic representation of an example system architecture of the example mobile terminal of Figures 1A - 1C;

Figures 3A - 3C disclose an image displayed on a first display of the example mobile terminal of Figures 1A - 1C in various rotational positions;

Figures 4A and 4B show yet another example embodiment providing handwritten character input on a second touch screen and corresponding display of the input text on the display of the communication terminal in different rotational positions;

Figure 5 discloses another example mobile terminal having an adjustable cover with an integrated display and control keys; and

Figure 6 discloses a schematic representation of an example system architecture of the example mobile terminal of Figure 5.

### DETAILED DESCRIPTION OF EXAMPLE EMBODIMENTS

Reference will now be made to the drawings to describe presently example embodiments of the invention. It is to be understood that the drawings are diagrammatic and schematic representations of the presently example embodiments, and are not limiting of the present invention, nor are they necessarily drawn to scale.

In general, embodiments of the present invention relate to a mobile terminal - such as a wireless telephone, PDA and the like - that is equipped with an adjustable cover. In illustrated embodiments, the adjustable cover includes an integrated display for displaying text and/or images, and may also include control keys for interacting with various functions provided by the terminal. Adjustability of the cover allows a user to place the display and/or control keys in a more convenient orientation so as to improve the usability of the communications terminal.

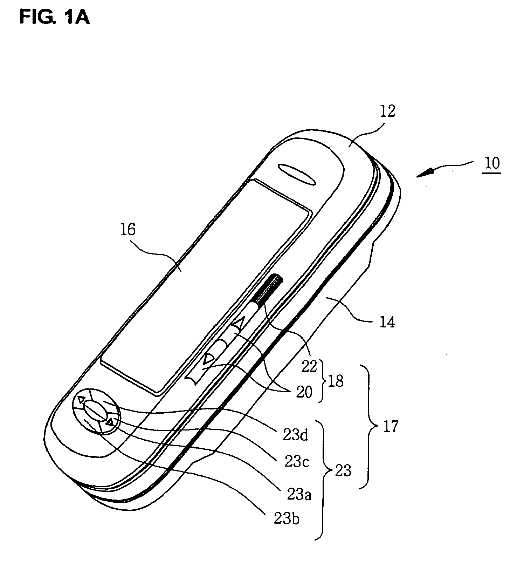

With reference now to Figures 1A - 1C, an example mobile terminal 10 is disclosed. The example mobile terminal 10 includes a cover 12 and a main body 14. The cover 12 and the main body 14 are each generally rectangular shaped, although various other shapes are possible. The cover 12 includes a first display 16 formed on the front surface of the cover 12. The cover 12 also includes a plurality of multi-keys 17 formed on the sides and front surface of the cover 12.

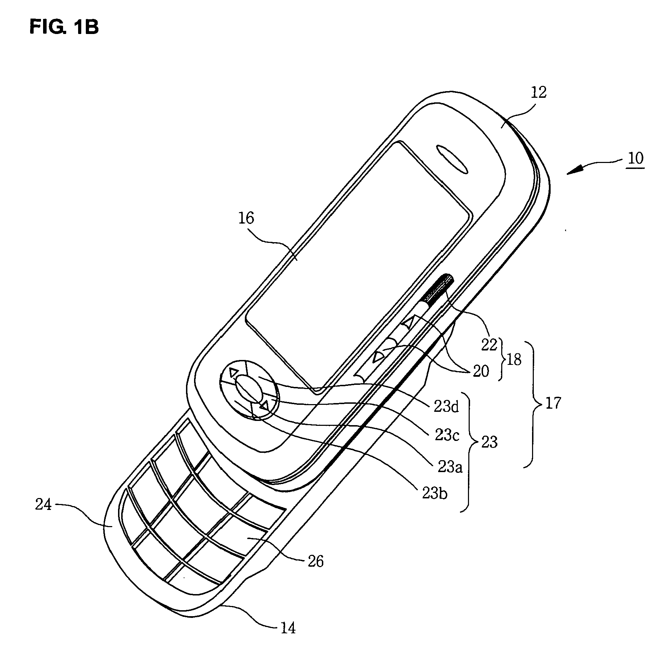

As disclosed in Figures 1A and 1B, the cover 12 is adjustable with respect to the main body portion. In this particular embodiment, the cover is slidably coupled to the main body 14 such that the cover 12 may be slid along a longitudinal axis of the main body 14 between a closed position, as disclosed in Figure 1A, to an open position, as disclosed in Figure 1B.

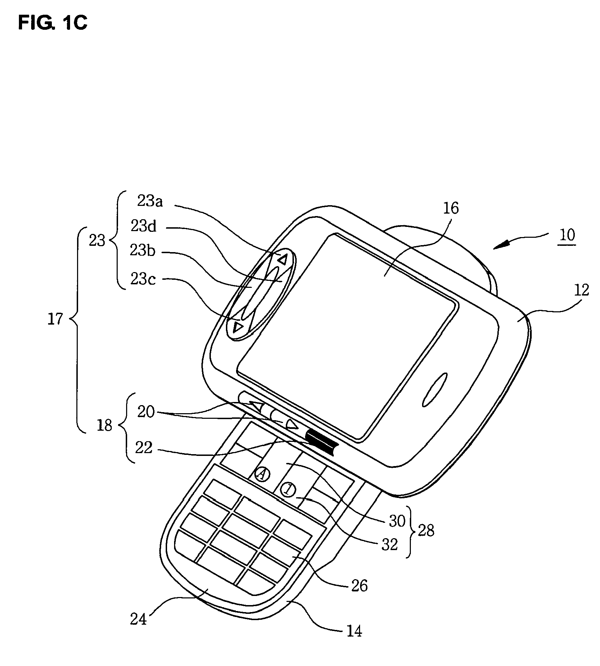

With particular reference now to Figures 1B and 1C, the cover 12 is pivotally coupled to the main body 14 such that the cover 12 may be rotated with respect to the main body 14 between a first position, as disclosed in Figure 1B, and a "landscape" orientation position, as disclosed in Figure 1C. When the cover 12 is in the landscape position, as disclosed in Figure 1C, the cover 12 and the main body 14 substantially form a "T" shape. Moreover, the display 16 provides a "landscape" orientation to the user.

Various components of the example mobile terminal 10, including the first display 16, the plurality of multi-keys 17, and the second display 24, will now be described in greater detail.

### 1. The First Display

With continuing reference to Figures 1A - 1C, the first display 16 can present various menu screens of the mobile terminal 10 to the user. In addition, the first display 16 can present various images to the user, such as moving images or still images. The first display 16 can be implemented using various display devices including, but not limited to, a Liquid Crystal Display ("LCD"), an Organic Light Emitting Diode ("OLED") display, or a Light Emitting Diode ("LED") display.

The first display 16 has a generally rectangular shape, although other shapes are possible. The horizontal-to-vertical dimension ratio of the first display 16 is less than one when the cover 12 is in the closed position or the open position, as disclosed in Figures 1 A and 1B, respectively. However, when the cover 12 is in the landscape position, as disclosed in Figure 1C, the horizontal-to-vertical dimension ratio of first display 16 is greater than one. Accordingly, images having a fixed horizontal-to-vertical dimension ratio can be automatically resized when the cover 12 is rotated so that the images display properly regardless of the orientation of the first display 16. A desirable horizontal-to-vertical dimension ratio for the first display 16 may be determined depending on the type of images to be displayed. For example, in the case of digital broadcasting images received via a broadcasting network, a desirable horizontal-to-vertical dimension ratio of first display 16 may be "16:9", which is suitable for high definition broadcasting images.

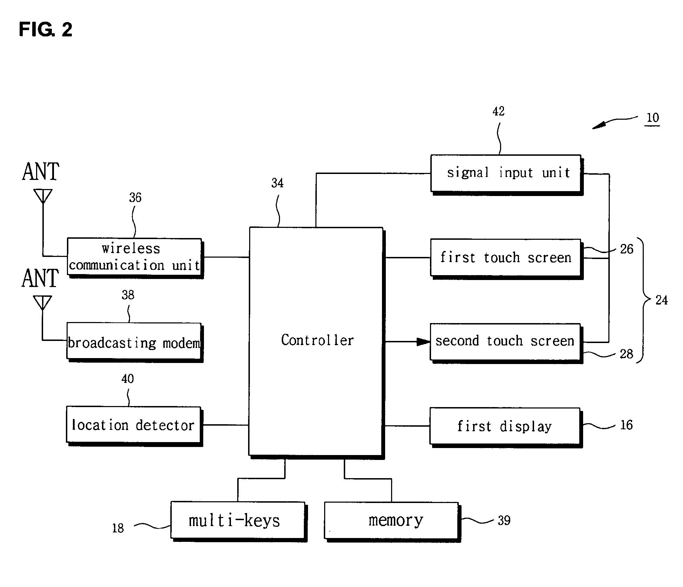

The example mobile terminal 10 includes a system architecture that enables the mobile terminal 10 to perform its various functions. With reference now to Figure 2, an example system architecture of the mobile terminal 10 is disclosed. In connection with the first display 16, the mobile terminal 10 includes a controller 34, a wireless communication unit 36, a broadcasting modem 38, a memory 39 and a location detector 40.

The controller 34 is configured to store data in the memory 39. The data may be received via the wireless communication unit 36 or the broadcasting modem 38. Furthermore, the controller 34 is configured to present image data stored in the memory 39 as one or more images on the first display 16. The controller 34 may also present audio data stored in the memory 39 as sounds on one or more speakers (not shown) integrated into, or connected to, the mobile terminal 10. In addition, the controller 34 is configured to present any data input through the touch-screen function of the second display 24 as one or more images on the first display 16 or sounds on the one or more speakers.

The location detector 40 can be a gravity sensing device or a gyro-sensing device which detects a rotation angle of the cover 12 with respect to the direction of gravity or with respect to a longitudinal axis of the main body 14 when the cover 12 is rotated with respect to the main body 14 and/or with respect to the direction of gravity. The location detector 40 can then provide the rotation angle to the controller 34. For example, the location detector 40 may determine that the rotation angle of the cover 12 with respect to the main body 14 is "0" degrees when the cover 12 is in the closed or open positions disclosed in Figures 1A and 1B, respectively. In contrast, the location detector 40 may determine that the rotation angle of the cover 12 with respect to the main body 14 is "90" degrees when the cover 12 is in the landscape position disclosed in Figure 1C.

With continued reference to Figure 2, the controller 34 is configured to continuously present images on the first display 16 in an upright position with respect to the direction of gravity or with respect to the main body 14 even when the cover 12 is in the landscape position, as disclosed in Figure 1C. As a result, the first display 16 thereby presents images to a user in a constant orientation regardless of the orientation of the display 16 with respect to the direction of gravity or with respect to the main body 14.

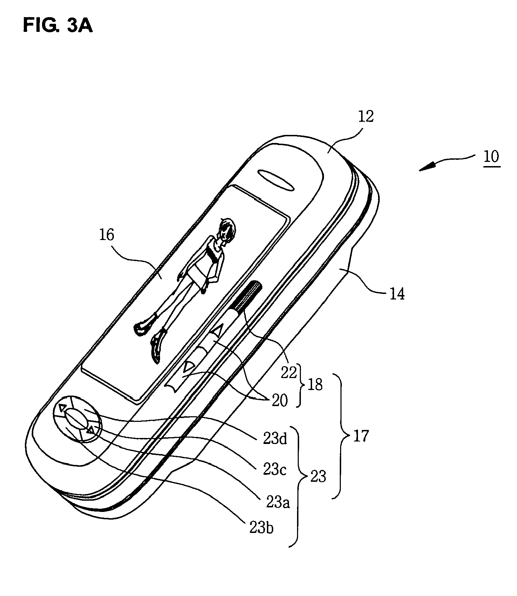

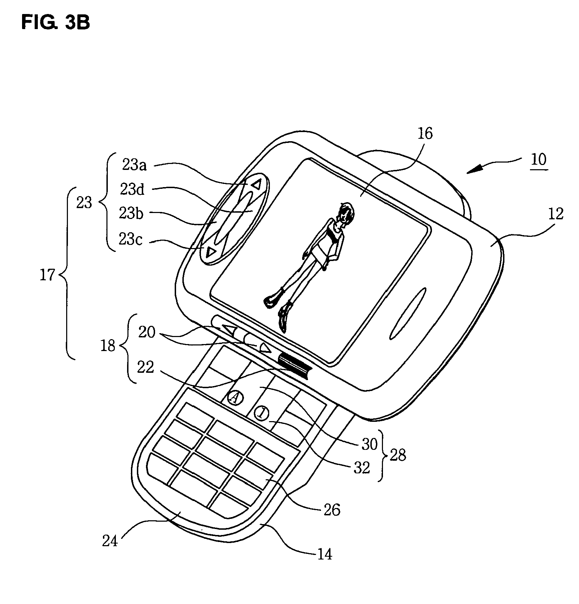

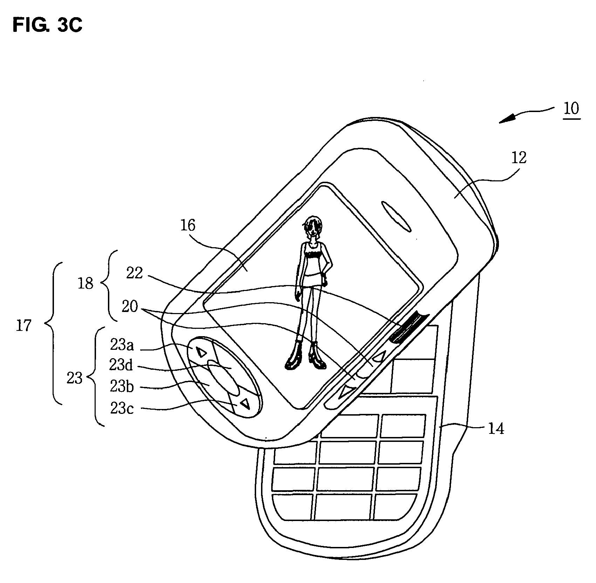

Turning now to Figures 3A - 3C, an example image is displayed on the first display 16 according to the rotation of the cover 12 of the example mobile terminal 10. As disclosed in Figures 3B and 3C, although the cover 12 is rotated with respect to the direction of gravity by 45 degrees or 90 degrees, the first display 16 displays moving images or still images in an upright position with respect to the direction of gravity. For example, when digital broadcasting images received via the broadcasting modem 38 are displayed on the first display 16, the direction of the digital broadcasting images can be maintained in an upright position with respect to the direction of gravity even if the cover 12 is rotated with respect to the main body 14. Maintaining images displayed on the first display 16 in an upright position with respect to the direction of gravity or with respect to the main body 14, regardless of the position of the display 16, can prevent users from feeling confused at the time of viewing the images.

### 2. The Multi-keys

With reference again to Figures 1A and 1B, aspects of the multi-keys 17 are disclosed in greater detail. The multi-keys formed on the cover 12 include side-keys 18 and navigation keys 23, which are formed on the front surface of the cover 12. As disclosed in Figures 1A and 1B, when the cover 12 is in the closed or open positions, and before the cover 12 is rotated into the landscape position, the side-keys 18 are located to the right of the first display 16, and the navigation keys 23 are located on the front surface of the cover 12 beneath the first display 16.

The side-keys 18 include key buttons 20 for generating input commands in response to a user pressing the key buttons 20. The side-keys 18 also include a jog dial 22 for generating an input command in response to a user rotating the jog dial 22. Markings which represent recognized functions, for example volume increase or decrease, are indicated on the key buttons 20. The key buttons 20 perform recognized functions related to their respective markings. Meanwhile, the jog dial 22 has a plurality of protrusions on the circumference thereof in order to facilitate rotation. The jog dial 22 may be used for mode switching upon selection of modes.

In the illustrated example, the navigation keys 23 include 4-way (up, down, left and right) navigation keys 23a, 23b, 23c and 23d concentrically located in an oval shape. Selection of the left and right navigation keys 23a and 23c can, for example, cause a cursor presented on the first display 16 to move to the left and to the right, respectively. Selection of the up and down navigation keys 23b and 23d can, for example, cause a cursor presented on the first display to move up and move down, respectively. As described above, each of the four navigation keys 23a, 23b, 23c and 23d performs a recognized function associated with an up/down and left/right key arrangement.

With particular reference again to Figure 1C, a change in the orientation and function of the multi-keys 17 is disclosed. As noted above, Figure 1C discloses the cover 12 after having been rotated to the landscape position. After the cover 12 has been rotated to the landscape position, the key buttons 20 and the jog dial 22 of the side keys 18 are no longer located to the right of the first display 16, but are instead located beneath the first display 16. Similarly, after the cover 12 has been rotated to the landscape position, the navigation keys 23 are no longer located beneath the first display 16, but are instead located to the left of the first display 16.

When the location of the side keys 18 is changed from the right side of the first display 16 to beneath the first display 16, the orientation of the markings on the key buttons 20 are also changed. Since these markings signify a different function depending on their orientation, they can be said to be "orientation-dependent." The functionality of the key buttons 20 can be configured to automatically change in response to a change in the orientation of the markings on the key buttons 20. This change in functionality can correspond to the change in orientation of the markings on the key buttons 20. For example, instead of the functionality of raising and lowering music, discussed above in connection with the markings, the key buttons 20 with the markings can be automatically reconfigured to move a cursor presented on the first display 16 to the left and to the right, respectively.

Similarly, as the cover 12 is rotated to the landscape position, as disclosed in Figure 1C, the four navigation keys 23a, 23b, 23c and 23d are also rotated to a new position. As a result, after the cover 12 has been rotated to the landscape position, the formerly left, down, right and up navigation keys 23a, 23b, 23c and 23d are changed to up, left, down, and right navigation keys 23a, 23b, 23c and 23d, respectively. Therefore, using the cursor moving example discussed above, the navigation key 23a can automatically change from moving the cursor left to moving the cursor up, and the navigation key 23c can automatically change from moving the cursor right to moving the cursor down. Each of the four navigation keys 23a, 23b, 23c and 23d could also automatically change menu shifting functionality corresponding to the change in orientation of each key. The significance of the markings on the keys 23a and 23c, like the significance of the markings on the side-keys 18, is orientation-dependent. The shape of the keys 23b and 23d, and relative positioning of these keys with respect to the keys 23a and 23c, makes the keys 23b and 23d orientation-dependent.

Furthermore, as the cover 12 is slid from the closed position disclosed in Figure 1A to the open position disclosed in Figure 1B, the functionality of the side-keys 18 can also be configured to automatically change. For example, when the first display 16 displays digital broadcasting images received through the broadcasting modem 38, the side-keys 18 can change function after the cover 12 is placed in the open position. This change in function can go from, for example, and volume raising and lowering function to channel switching function between a current channel and a previous channel and a current channel and a subsequent channel. At the same time, the jog dial 22, which rotates in upward and downward directions when the cover 12 is in the open position, can take over the function of raising and lowering the volume of the digital broadcasting.

As described above, the function of the multi-keys 17 can be modified depending on the orientation of the first display 16 with respect to the main body 14 and/or the direction of gravity. This modification of functionality based on orientation can make the function of each input key less confusing to a user of the mobile terminal 10 regardless of the current orientation of each input key.

### 3. The Second Display

With continuing reference to Figures 1A - 1C, in an example embodiment, a second display 24 can also be provided. In the illustrated embodiment, the second display 24 is configured to present various images such as, but not limited to, menu screens, moving images or still images. In particular, the second display 24 includes a first touch screen 26 in which touches to buttons are detectable and a second touch screen 28 in which handwriting using, for example, a stylus or fingernail (not shown) is detectable.

The first touch screen 26 is formed on the lower portion of the second display 24, and the second touch screen 28 is formed on the upper portion of the second display 24. The first touch screen 26 is exposed when the cover 12 is slid along the main body 14 from the closed position, as disclosed in Figure 1A, to the open position, as disclosed in Figure 1B. The second touch screen 28 is exposed when the cover 12 is rotated from the open position to the landscape position. As disclosed in Figure 1C, the second touch screen 28 is formed proximate to the point at which the cover 12 and the main body 14 intersect each other when the cover 12 is in the landscape position.

The second touch screen 28 includes a dedicated alphabetic region 30 configured to detect the handwritten input of alphabetic characters. The second touch screen 28 also includes a dedicated numeric region 32 configured to detect the handwritten input of numerical characters. A user can input alphabetic characters and numerical characters into the mobile terminal 10 by tracing characters on the dedicated alphabetic region 30 and the dedicated numeric region 32. However, the dedicated alphabetic region 30 and numeric region 32 are only given as examples, and the second touch screen 28 can be configured to receive as input other types of characters, for example, any number of foreign language characters as well as various symbols. The second touch screen 28 can also be divided into a single dedication region, or more than two dedicated regions.

With reference again to Figure 2, the first touch screen 26 and the second touch screen 28 are configured to transfer button signals and writing signals, respectively, to the controller 34 via a signal input unit 42. The controller 34 then provides the memory 39 with control signals corresponding to the button signals and the writing signals. The memory 39 then stores data corresponding to the button signals and the writing signals. In addition, the dedicated alphabetic region 30 and the dedicated numerical region 32 of the second touch screen 28 can be configured to have relatively quick and accurate writing detection when a writing detection mode is selected on the mobile terminal 10. The writing detection mode may be automatically selected when the cover 12 is rotated from the open position, as disclosed in Figure 1B, to the landscape position, as disclosed in Figure 1C, 3B, 4A and 4B. The writing detection mode can involve the dedication of increased system resources within the mobile terminal 10 to the second touch screen 28 in order to improve the speed and accuracy of handwriting detection. Later, when the cover 12 is rotated back to the open position, as disclosed in Figure 1B, the increased system resources that were dedicated to the second touch screen 28 can be reassigned to other functions of the mobile terminal 10.

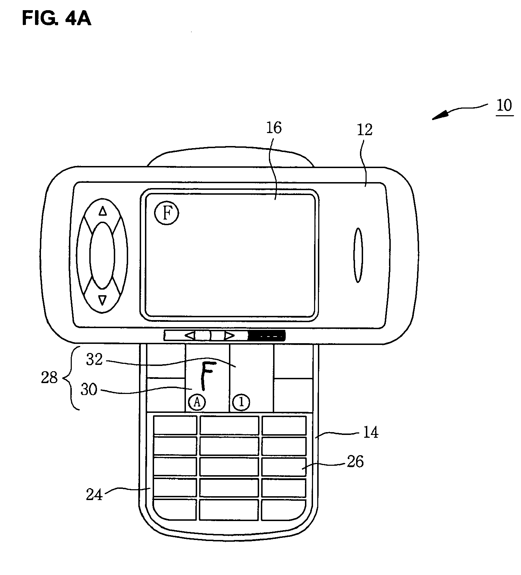

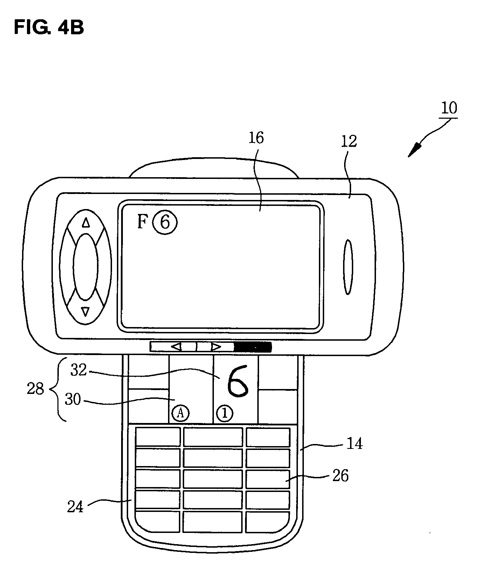

In connection with the discussion of the second touch screen 28, Figures 4A and 4B disclose an example alphabetic character and numeric character that are traced on the second touch screen 28 and then displayed on the first display 16.

With reference first to Figure 4A, an example operation of the dedicated alphabetic region 30 will be disclosed. An alphabetic character, for example, "F", can be traced on the dedicated alphabetic region 30 using, for example, a stylus pen. The controller 34 then determines which alphabetical character is identical to or most similar to the character traced using the stylus pen from among a list of alphabetical characters stored in the memory 39. The controller 34 then retrieves the most closely matched alphabetical character from the memory 39 and sends it to the first display 16 where it is presented to the user.

With reference now to Figure 4B, an example operation of the dedicated numeric region 32 is disclosed. A numerical character, for example, "6", is traced on the dedicated numeric region 32 using, for example, a stylus pen. The controller 34 then determines which numerical character is identical to or most similar to the numerical character traced using the stylus pen from among a list of numerical characters stored in the memory 39. The controller 34 then retrieves the most closely matched numerical character from the memory 39 and sends it to the first display 16 where it is presented to the user.

As described above, the example mobile terminal 10 disclosed in Figures 1A-4B effectively utilizes the space on the main body 14 that is exposed when the cover 12 is rotated 90 degrees to the landscape position. Specifically, this exposed space is occupied by the second touch screen 28 which is configured to receive input from a user. In addition, the automatic switching to a writing detection mode when the cover 12 is rotated into the landscape position can result in increased speed and accuracy of the recognition of characters input into the second touch screen 28 by the user.

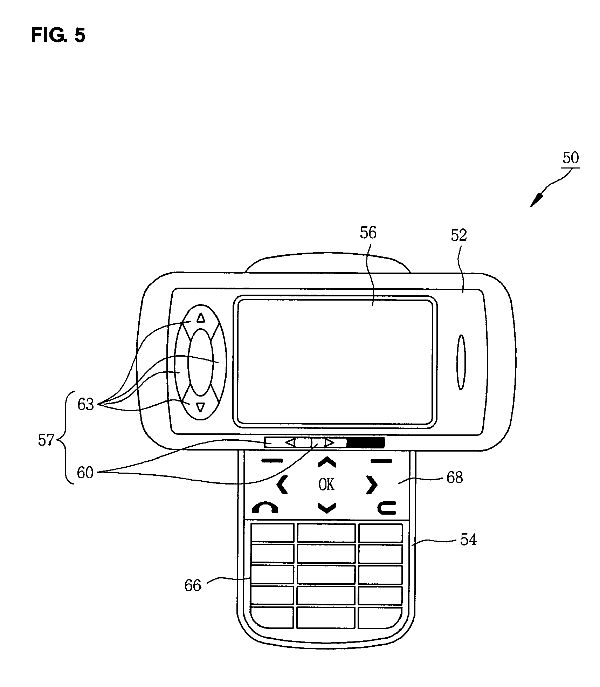

Other possibilities exist for the utilization of the space on the main body of a mobile terminal that is exposed when the cover of the mobile terminal is rotated 90 degrees to a landscape position. For example, Figure 5 discloses another example mobile terminal 50. Like the mobile terminal 10 discussed above, the mobile terminal includes a slidable and rotatable cover 52 and a main body 54. The cover 52 is coupled to the main body 54 and adapted to slide along a longitudinal axis of the main body and to rotate with respect to the main body 54.

The cover 52 includes a first display 56 formed on the front surface thereof, and a plurality of multi-keys 57 formed on two sides thereof. The multi-keys 57 includes a plurality of navigation keys 63 and key buttons 60. These keys on the cover 52 are substantially equal to navigation keys 23 and the key buttons 20 disclosed in Figures 1A - 1C.

Further, the main body 54 also includes a key pad 66 and a touch pad 68. The key pad 66 is exposed after the cover 52 is slid longitudinally along the main body 54, and the touch pad 68 is exposed after the cover 52 is rotated 90 degrees to a landscape position. The touch pad 68 is formed proximate to the point at which the cover 52 and the main body 54 intersect each other when the cover 52 is in the landscape position.

The touch pad 68 comprises one or more touch buttons. The buttons of the touch pad 68 can be configured to light up when exposed or when touched. For example, the buttons of the touch pad 68 may glow red when exposed or touched. The touch pad 68 is configured with sensors that are sensitive to touch. The buttons of the touch pad can detect the touch of a user's finger, for example.

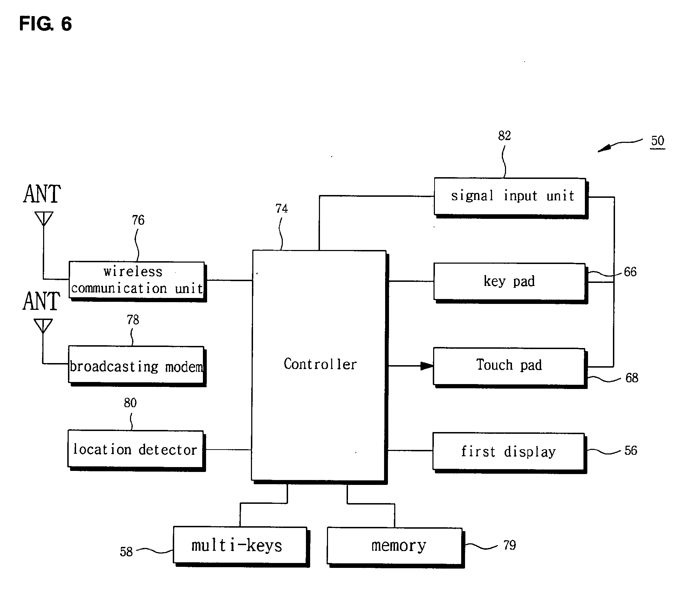

The example mobile terminal 50 includes a system architecture that enables the mobile terminal 50 to perform its various functions. With reference now to Figure 6, the mobile terminal 50 includes a controller 74, a wireless communication unit 76, a broadcasting modem 78, a memory 79, a location detector 80, and a signal input unit 82, each of which is similar in function to the corresponding components disclosed in connection with the mobile terminal 10 in Figure 2. The system architecture of the mobile terminal 50 also includes the first display 56, the key pad 66, and the touch pad 68, as described above.

Continuing with a description of the functionality of the touch pad 68, the touch pad 68 is configured to allow a user to navigate menus and access other functions of the mobile terminal 50 after the cover 52 is placed in the landscape position. The touch pad 68 may be used to select a digital broadcasting signal that is subsequently received through the broadcasting modem 78. For example, the touch buttons of the touch pad 68 may be used to change the channel being received by the broadcasting modem 78. The touch buttons may also be used, for example, to change the volume up or down, change the broadcasting channel to the previous channel, or pre-set the broadcasting channels to be received by the broadcasting modem 78.

### 4. Alternative Embodiments

Although the example embodiments of the present invention have been described with reference to the Figures, the present invention is not limited to the examples disclosed in the Figures. For example, although the mobile terminal disclosed in the Figures is a mobile telephone, example embodiments of the present invention may be mobile terminals that do not include telephone functionality. For example, example embodiments of the invention may be mobile terminals that are dedicated primarily to the functionality of, for example, an MP3 player or other media player. Any mobile terminal that includes a slidable and rotatable cover can benefit from at least some of the example aspects of the invention disclosed herein.

In addition, although in the above embodiments the example touch input device are disclosed as either touch screens or touch pads, other types of touch input devices may be used. For example, touch input devices may be configured to detect input from other than a stylus or finger/fingernail. Other types of input include, but are not limited to, physical, electrical, magnetic, and thermal input.

Also, although in the above embodiments the cover is configured to be slid in an upward direction with respect to the main body, the cover may instead be configured to be slid in a downward direction with respect to the main body. Furthermore, the cover may be configured to be rotated without first being slid either up or down. Likewise, the cover may be configured to be rotated before being slid up or down. In each case, the touch screens as well as the multi-keys may be appropriately repositioned on the mobile terminal.

Further, although in the above embodiments the first display has been described as an image device formed of light-emitting elements and configured to display only images, the first display may instead be a touch screen, or a combination touch screen and image device. Likewise, each of the above-described displays could include multiple displays that may or may not function independently from one another.

Moreover, although in the above embodiments the images displayed on the first display are maintained in an upright position with respect to the direction of gravity regardless of the sliding or rotation of the cover, the first display may be configured to display images in a non-upright position with respect to gravity. Likewise, the orientation of images presented on the first display may be independent of gravity and/or fixed with respect to another point of reference, such as the orientation of the main body. Furthermore, the first display may be configured to vary the direction of a displayed imaged depending on the type of image being displayed.

Also, although in the above embodiments the second display 24 includes the button touch screen 26 and the handwriting touch screen 28, the second display may include only the handwriting touch screen 28 which is exposed through the sliding and rotation of the cover 12. In this case, a numeral keypad may be formed at the location of the button touch screen 26 and be configured to perform the same function as the button touch screen 26.

Further, although in the above embodiments the side-keys of multi-keys are formed on the left side of the cover when the cover is in the closed position, and the side-keys include key buttons and the jog dial, the present invention is not limited to the specific locations, shapes, and types of keys or buttons. For example, other input devices such as a jog shuttle may be included. The multi-keys may also include other orientation-dependent markings, such as different shapes or colors, than those disclosed above that can similarly signify a different meaning and function depending on the orientation of the cover. Furthermore, although the markings may rotate in response to the rotation of the cover thereby being changed or modified, a display device, such as a LCD, may be embedded in the surface of the multi-keys and be configured to change the appearance of the markings in response to the rotation of the cover in order, for example, to maintain the orientation of the marking constant despite a changed orientation of the cover..

It will be apparent to those skilled in the art that various modifications and variation may be made in the present invention without departing from the spirit or scope of the invention. Thus, it is intended that the present invention cover the modifications and variations of this invention provided they come within the scope of the appended claims and their equivalents.

## Claims

1. A mobile terminal comprising:
a main body;
a cover coupled to the main body, wherein the cover is configured to slide along a longitudinal axis of the main body and to rotate with respect to the main body; and
a touch input device formed on the main body, wherein the touch input is configured to be exposed after the cover is slid along the main body and rotated with respect to the main body.

2. The mobile terminal of claim 1, wherein the touch input device comprises a touch pad.

3. The mobile terminal of claim 2, further comprising a broadcasting modem for receiving digital broadcasting signals, wherein the touch input device is configured to receive input that is used to control the presentation of any digital broadcasting signals received through the broadcasting modem.

4. The mobile terminal of claim 1, wherein the touch input device comprises a touch screen configured to receive as input handwriting.

5. The mobile terminal of claim 4, wherein the touch screen is divided into two or more detection regions each configured to detect a predetermined class of characters.

6. The mobile terminal of claim 1, wherein the cover is coupled to the main body so as necessitate being slid along a longitudinal direction of the main body before the cover can be rotated with respect to the main body.

7. The mobile terminal of claim 1, wherein the cover is coupled to the main body so as to necessitate being rotated with respect to the main body before the cover can be slid along a longitudinal direction of the main body.

8. The mobile terminal of claim 1, further comprising one or more multi-keys formed on a side of one or both of the cover and the main body.

9. The mobile terminal of claim 8, wherein at least one of the multi-keys is configured to perform a different function depending on the relative orientation between the cover and the main body.

10. The mobile terminal of claim 9, wherein at least one of the multi-keys is a side-key formed on a side of the cover or a navigation key formed on a front surface of the cover.

11. The mobile terminal of claim 9, wherein the at least one multi-key includes an orientation-dependent marking, wherein the significance of the marking is changed depending on the rotation of the cover, and the function of the at least one multi-key key is automatically changed to coincide with a change to the significance of the marking due to the rotation of the cover.

12. The mobile terminal of claim 1, further comprising:
a display formed on a front surface of the cover and configured to display images;
a location detector for detecting a relative rotation angle of the cover to the main body; and
a controller configured to change the orientation of images presented on the display depending on the relative rotation angle of the cover to the main body.

13. The mobile terminal of claim 1, further comprising:
a display formed on a front surface of the cover and configured to display images;
a location detector for detecting a relative location of the display with respect to the direction of gravity; and
a controller configured to change the orientation of images presented on the display depending on the relative location of the display with respect to the direction of gravity.

14. The mobile terminal of claim 13, wherein the controller is configured to maintain the image on the display upright with respect to the direction of gravity.

15. A mobile terminal comprising:
a main body;
a cover coupled to the main body, the cover having a display thereon, the cover configured to slide along a longitudinal direction and to rotate with respect to the main body; and
one or more multi-keys formed on the cover and configured to perform a different function depending on a relative rotation between the cover and the main body.

16. The mobile terminal of claim 15, wherein at least one of the multi-keys is a side key formed on a side of the cover or a navigation key formed on a front surface of the cover.

17. The mobile terminal of claim 15, wherein at least one of the multi-keys includes an orientation-dependent marking, wherein the significance of the marking is changed depending on the rotation of the cover, and the function of the at least one multi-key key is automatically changed to coincide with a change to the significance of the marking due to the rotation of the cover.

18. The mobile terminal of claim 17, wherein the marking automatically rotates in response to the rotation of the cover.
